# FASCICULE DE BREVET EUROPEEN

(11) **EP 0 754 876 B1**
(45) Date de publication et mention de la délivrance du brevet: **08.05.2002**
(21) Numéro de dépôt: 96401624.0
(22) Date de dépôt: 19.07.1996
(51) Int. Cl.: F16F 1/38

(54) **Support élastique pour moteur de véhicule**
Elastisches Lager für einen Fahrzeugmotor
Elastic motor support for vehicle

(30) Priorité: 20.07.1995 FR 9508803
(43) Date de publication de la demande: 22.01.1997
(73) Titulaire: HUTCHINSON, 75008 Paris (FR)
(72) Inventeur: Dandre, Jacques, 28200 Chateaudun (FR); Chenais, Gilles, 28200 Chateaudun (FR); Menager, Joel, 28200 Chateaudun (FR)
(74) Mandataire: Picard, Jean-Claude Georges

(56) Documents cités:
- GB-A- 679 404
- US-A- 5 129 479
- INGENIEURS DE L'AUTOMOBILE, no. 11/12, Novembre 1978, pages 680-685, XP002000304 M. R. BARGE: "LES ARTICULATIONS ELASTIQUES"

## Description

La présente invention concerne un support élastique pour moteur de véhicule comportant une armature extérieure destinée à être reliée au moteur, une armature intérieure destinée à être reliée à la caisse du véhicule et des bras de matière élastique reliant ces deux armatures l'une à l'autre en y étant adhérisés par leurs extrémités respectives, l'armature intérieure se trouvant ainsi enrobée dans ladite matière, ce support pouvant de la sorte se déformer élastiquement lorsque des efforts, dus notamment au poids du moteur, s'exercent entre les armatures dans une direction verticale.

Le problème que la présente invention vise à résoudre est celui du maintien du centrage de ces deux armatures l'une par rapport à l'autre lors de la mise en place du moteur. En effet un tel support possède une faible rigidité dans la direction horizontale selon laquelle l'armature intérieure pourrait se dégager ou se "déboîter" de l'armature extérieure, direction dite "axiale" ou "X" ci-après.

Il importe donc, au moment de cette mise en place, d'éviter un désalignement des deux armatures par décalage relatif dans cette direction axiale, désalignement qui évidemment nuirait aux caractéristiques élastiques du support après mise en charge.

Une solution connue consiste à interposer une cale rigide, par exemple en matière plastique, entre les deux armatures pour les bloquer l'une par rapport à l'autre dans la direction axiale lors du montage, cette cale devant être extraite après mise en charge du support.

L'inconvénient de cette solution réside dans le fait que l'extraction de la cale peut être omise ou difficile lors du montage, et qu'alors le support perd toute fonction élastique.

La présente invention vise donc à résoudre le problème ainsi posé en éliminant cet inconvénient.

A cet effet un support du type général défini ci-dessus est, conformément à la présente invention, essentiellement caractérisé en ce que les deux armatures présentent respectivement des portées complémentaires propres à coopérer ensemble de façon à maintenir le centrage mutuel de ces deux armatures selon la direction axiale ci-dessus définie tant que le support n'est pas soumis à la charge du moteur, cette coopération et le maintien de centrage qu'elle assure étant automatiquement supprimés dès mise en charge du support par le moteur.

Ainsi, il n'est plus besoin d'extraire une cale après montage, ce qui évite radicalement le risque mentionné ci-dessus.

Dans des modes de réalisation avantageux, on a recours en outre à l'une et/ou à l'autre des dispositions suivantes :
- l'armature extérieure est constituée par un manchon cylindrique de génératrices parallèles à la direction axiale, l'armature intérieure est constituée par un noyau cylindrique de génératrices parallèles à la direction axiale et les portées complémentaires des deux armatures sont respectivement des butées et des évidements agencés à la face supérieure interne de la base du manchon et à la face inférieure du noyau de façon telle que les butées soient engagées verticalement dans les évidements au repos du support, en empêchant alors les déplacements relatifs des deux armatures selon la direction axiale, et soient au contraire dégagées verticalement de ces évidements lors de la mise en charge dudit support,
- dans un support selon l'alinéa précédent, les portées complémentaires des deux armatures sont constituées respectivement par la base du manchon et par une gorge complémentaire, ouverte vers le bas, évidée dans la face inférieure, tapissée de matière élastique, du noyau, les bords de ladite gorge étant propres à coiffer jointivement ladite base du manchon tant que le support n'est pas mis en charge,
- dans un support selon l'alinéa qui précède le précédent, la portion, du manchon, qui coopère verticalement avec le noyau est une entretoise rapportée à l'intérieur de ce manchon,
- dans un support selon l'alinéa précédent, les deux portées complémentaires sont constituées respectivement par une rainure évidée dans l'entretoise et s'étendant selon la direction horizontale perpendiculaire à la direction axiale et par un relief complémentaire prévu à la base du noyau.

L'invention comprend, mises à part ces dispositions principales, certaines autres dispositions qui s'utilisent de préférence en même temps et dont il sera plus explicitement question ci-après.

Dans ce qui suit, l'on va décrire deux modes de réalisation préférés de l'invention en se référant aux dessins ci-annexés d'une manière bien entendu non limitative.

La figure 1, de ces dessins, montre le support selon le premier mode de réalisation en élévation, à l'état libre ou de repos, c'est-à-dire avant montage et mise en charge.

La figure 2 est une vue en coupe axiale selon II-II de la figure 1; la figure 2' une variante à échelle réduite.

La figures 3 et 4 montrent le même support, après sa mise en charge, respectivement en élévation et en coupe verticale selon IV-IV, figure 3.

La figure 5 montre le support selon le second mode de réalisation, en élévation et à l'état libre.

La figure 6 est une vue en coupe verticale selon VI-VI de la figure 5.

Les figures 7 et 8 montrent ledit second support après mise en charge, respectivement en élévation et en coupe verticale selon VIII-VIII, figure 7.

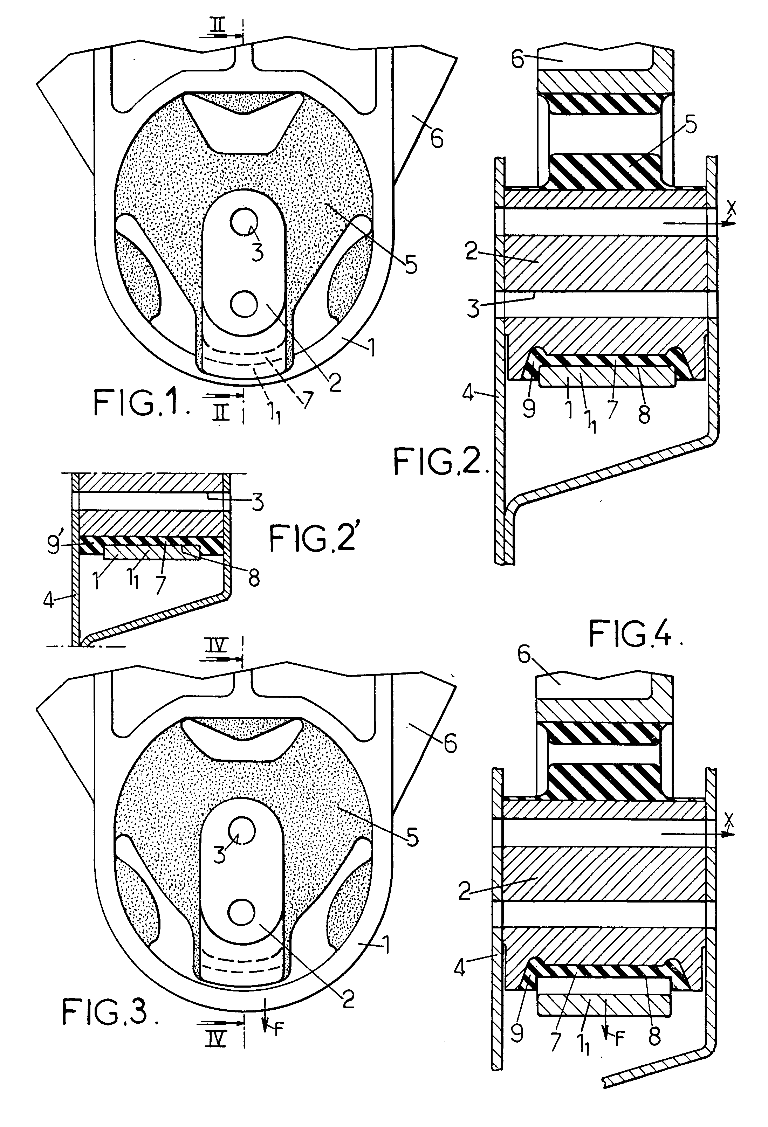

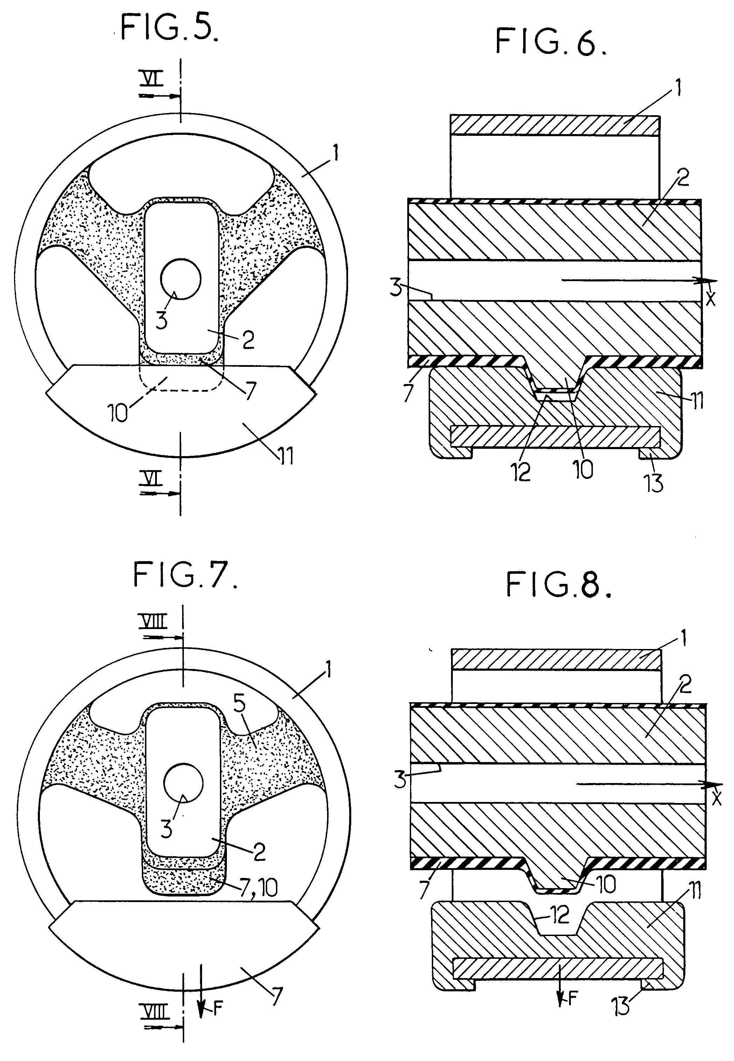

Dans chaque cas, le support comprend :
- une armature extérieure se présentant sous la forme d'une bague ou manchon cylindrique 1 dont les génératrices sont parallèles à une direction horizontale X dite ci-après "axiale", cette bague étant légèrement allongée verticalement dans le premier cas (figures 1 à 4) et de révolution dans le second cas (figures 5 à 8),
- une armature intérieure 2 présentant la forme d'un noyau massif cylindrique dont les génératrices sont encore parallèles à la direction X, ce noyau étant percé par un ou deux alésages 3 s'étendant selon ladite direction X pour la réception d'organes de fixation à la caisse 4 d'un véhicule,
- et deux bras 5 en V reliant l'une à l'autre les deux armatures 1 et 2 et constitués par une masse de matériau élastique, laquelle enrobe totalement le noyau 2.

Le manchon 1 est relié au carter du moteur du véhicule par l'intermédiaire de pièces de liaison 6 appropriées qui. peuvent être venues de moulage avec ce manchon ou constituer un palier pour celui-ci.

La portion, de la masse en matière élastique constitutive des bras 5, qui enrobe la face inférieure du noyau 2 constitue un revêtement élastique 7 de cette face, revêtement adhéré contre ladite face et uniquement contre celle-ci.

Dans le premier mode de réalisation illustré par les figures 1 à 4, la face inférieure du noyau 2, tapissée par le revêtement 7, se présente sous la forme d'une gorge 8 incurvée semblablement à la base 1₁ du manchon 1, base qui est située juste au-dessous de ladite gorge.

La forme et les dimensions de cette gorge 8 sont choisies de façon telle que, pour l'état libre ou de repos du support, qui est son état avant montage et qui est illustré sur les figures 1 et 2, elle coiffe jointivement la base 1₁ du manchon, ce qui solidarise entre elles les deux armatures 1 et 2 selon la direction X.

Cette solidarisation est effectuée d'une manière relativement souple vu que les deux bords de la gorge 8, matérialisés par des bourrelets élastiques 9 délimitant latéralement la couche de revêtement 7 qui tapisse la gorge 8, peuvent être plus ou moins comprimés selon la direction X entre le manchon 1 et des oreilles 14 de l'armature 2.

L'ensemble est conçu de façon telle que, dès mise en charge du support par le moteur après montage de ce support, la sollicitation relative vers le bas F (figures 3 et 4) qui en résulte du manchon 1 lié au moteur par rapport au noyau 2 lié à la caisse ait pour effet automatiquement de dégager verticalement la base 1₁ du manchon 1 hors de la gorge 8, ce qui libère selon la direction X le noyau 2 par rapport au manchon 1.

L'abaissement relatif qui en résulte du manchon 1 par rapport au noyau 2 est visible sur les figures 3 et 4, montrant le support en son état de charge.

Dans le second mode de réalisation illustré par les figures 5 et 8, on ne retrouve plus la gorge 8 formée dans la face inférieure du noyau 2, mais un relief 10 faisant saillie sur la zone centrale de cette face, relief constitué notamment par un plot ou par une nervure présentant un profil en V et s'étendant selon la direction horizontale perpendiculaire à la direction X.

En outre, une entretoise 11 est rapportée sur la base du manchon 1, à l'intérieur de cette base, la face supérieure de cette entretoise 11 étant évidée par une rainure ou autre évidement 12 dont la forme est complémentaire de celle du relief 10.

On comprend facilement que, ici encore, l'introduction verticale du relief 10, tapissé par le revêtement élastique 7, dans le creux ou évidement 12, assure le centrage relatif des deux armatures 1 et 2 selon la direction X et que le dégagement vertical automatique dudit relief 10 hors dudit creux 12 dû à la mise en charge du support par le moteur, illustrée par la flèche F, assure automatiquement une libération mutuelle des deux armatures selon ladite direction X.

L'entretoise 11 peut être sertie sur le manchon 1 par rabattement de pattes 13 bordant cette entretoise sur ce manchon.

Dans tous les cas, le revêtement 7 peut servir de butée élastique pour limiter les débattements du moteur du genre des rebonds, lorsque l'armature extérieure 1 liée à ce moteur est sollicitée brusquement vers le haut par rapport à l'armature 2 liée à la caisse.

La variante de la figure 2' montre la possibilité de supprimer les oreilles métalliques 14 ainsi que les bourrelets élastiques 9 visibles sur les figures 2 et 4. L'effet de ces bourrelets est remplacé par une surépaisseur 9' du revêtement 7 de part et d'autre du manchon 1, cette surépaisseur pouvant être légèrement précontrainte entre ce manchon et les flasques 4 pour supprimer tout jeu dans la direction X ou augmenter la rigidité dans cette direction avant application de la charge du moteur dans la direction verticale.

## Revendications

1. Support élastique pour moteur de véhicule comportant une armature extérieure (1) destinée à être reliée au moteur, une armature intérieure (2) destinée à être reliée à la caisse du véhicule et des bras (5) de matière élastique reliant ces deux armatures l'une à l'autre en y étant adhérisés par leurs extrémités respectives, l'armature intérieure se trouvant ainsi enrobée dans ladite matière, **caractérisé en ce que** les deux armatures présentent respectivement des portées complémentaires (1₁, 8 ; 12, 10) propres à coopérer ensemble de façon à maintenir le centrage mutuel de ces deux armatures selon la direction axiale de leur emboîtement mutuel tant que le support n'est pas soumis à la charge du moteur, cette coopération et le maintien de centrage qu'elle assure étant automatiquement supprimés dès mise en charge du support par le moteur.

2. Support selon la revendication 1, **caractérisé en ce que** l'armature extérieure est constituée par un manchon cylindrique (1) de génératrices parallèles à la direction axiale, **en ce que** l'armature intérieure est constituée par un noyau cylindrique (2) de génératrices parallèles à la direction axiale (X) et **en ce que** les portées complémentaires des deux armatures sont respectivement des butées (1₁, 10) et des évidements (8, 12) agencés à la face supérieure interne de la base du manchon (1) et à la face inférieure du noyau (2) de façon telle que les butées soient engagées verticalement dans les évidements au repos du support, en empêchant alors les déplacements relatifs des deux armatures selon la direction axiale, et soient au contraire dégagées verticalement de ces évidements lors de la mise en charge dudit support.

3. Support selon la revendication 2, **caractérisé en ce que** les portées complémentaires des deux armatures sont constituées respectivement par la base (1₁) du manchon (1) et par une gorge complémentaire (8), ouverte vers le bas, évidée dans la face inférieure, tapissée de matière élastique (7), du noyau (2), les bords (9, 9') de ladite gorge étant propres à coiffer jointivement ladite base du manchon tant que le support n'est pas mis en charge.

4. Support selon la revendication 2, **caractérisé en ce que** la portion, du manchon (1), qui coopère verticalement avec le noyau (2) est une entretoise (11) rapportée à l'intérieur de ce manchon.

5. Support selon la revendication 4, **caractérisé en ce que** les deux portées complémentaires sont constituées respectivement par une rainure (12) évidée dans l'entretoise (11) et s'étendant selon la direction horizontale perpendiculaire à la direction axiale et par un relief complémentaire (10) prévu à la base du noyau.

## Claims

1. Elastic mount for vehicle engine including an outer armature (1) intended to be connected to the engine, an inner armature (2) intended to be connected to the body of the vehicle, and arms (5) made of elastic material connecting these two armatures together, being bonded thereto via their respective ends, the inner armature thus being covered in the said material, **characterized in that** the two armatures have respectively complementary bearing surfaces (1₁,8;12,10) capable of interacting so as to maintain the mutual centring of these two armatures in the axial direction in which they are nested together as long as the mount is not subjected to the load of the engine, this interaction and the maintaining of centring which it provides both being automatically eliminated as soon as the mount is loaded up by the engine.

2. Mount according to Claim 1, **characterized in that** the outer armature consists of a cylindrical sleeve (1) with generatrices parallel to the axial direction, **in that** the inner armature consists of a cylindrical core (2) with generatrices parallel to the axial direction (X) and **in that** the complementary bearing surfaces of the two armatures are respectively stops (1₁,10) and cavities (8,12) arranged at the internal upper face of the base of the sleeve (1) and at the lower face of the core (2) in such a way that the stops are engaged vertically in the cavities when the mount is at rest, thus preventing relative displacements of the two armatures in the axial direction, and on the other hand are vertically disengaged from these cavities when the said mount is loaded up.

3. Mount according to Claim 2, **characterized in that** the complementary bearing surfaces of the two armatures consist respectively of the base (1₁,) of the sleeve (1) and of a complementary groove (8), open downwards, hollowed from the lower face, lined with elastic material (7), of the core (2), the edges (9,9') of the said groove being capable contiguously of capping the said base of the sleeve as long as the mount is not loaded up.

4. Mount according to Claim 2, **characterized in that** the portion, of the sleeve (1), which interacts vertically with the core (2) is a spacer piece (11) attached on the inside of this sleeve.

5. Mount according to Claim 4, **characterized in that** the two complementary bearing surfaces consist respectively of a slot (12) hollowed from the spacer piece (11) and running in the horizontal direction perpendicular to the axial direction, and of a complementary relief (10) provided at the base of the core.

## Patentansprüche

1. Elastisches Lager für einen Fahrzeugmotor, bestehend aus einer äußeren Halterung (1), die dazu vorgesehen ist, mit dem Motor verbunden zu werden, einer inneren Halterung (2), die dazu vorgesehen ist, mit der Fahrzeugkarosserie verbunden zu werden, und aus Armen (5) aus elastischem Werkstoff, die diese beiden Halterungen miteinander verbinden, indem sie an ihnen jeweils mit einem Ende befestigt sind, wobei die innere Halterung auf diese Weise von diesem elastischen Werkstoff umhüllt wird,
**dadurch gekennzeichnet,**
**dass** die beiden Halterungen jeweils komplementäre Auflageflächen (1₁, 8; 12, 10) aufweisen, die miteinander dergestalt zusammenwirken können, dass die Zentrierung dieser beiden Halterungen aufeinander in der axialen Richtung ihres Ineinandersteckens erhalten bleibt, solange das Lager vom Motor nicht belastet wird, wobei dieses Zusammenwirken und der dadurch gewährleistete Erhalt der Zentrierung automatisch beendet wird, wenn das Lager vom Motor belastet wird.

2. Lager nach Anspruch 1,
**dadurch gekennzeichnet,**
**dass** die äußere Halterung von einer zylindrischen Hülse (1) gebildet wird, deren Mantellinien parallel zur Achsrichtung verlaufen, und dass die innere Halterung von einem zylindrischen Kern (2) gebildet wird, dessen Mantellinien parallel zur Achsrichtung (X) verlaufen, und dass die komplementären Auflageflächen der beiden Halterungen Anschläge (1₁, 10) bzw. Ausnehmungen (8, 12) bilden, die dergestalt an der inneren Oberseite der Basis der Hülse (1) und an der Unterseite des Kerns (2) gebildet sind, dass die Anschläge in Ruhestellung des Lagers senkrecht in die Ausnehmungen eingreifen, womit sie Verschiebungen zwischen den beiden Halterungen in Achsrichtung verhindern, hingegen bei Belastung dieses Lagers senkrecht aus diesen Ausnehmungen gelöst werden.

3. Lager nach Anspruch 2,
**dadurch gekennzeichnet,**
**dass** die komplementären Auflageflächen der beiden Halterungen von der Basis (1₁) der Hülse (1) bzw. von einer sich nach unten öffnenden, komplementären Auskehlung (8), die in der mit elastischem Material (7) ausgekleideten Unterseite des Kerns (2) ausgeführt ist, gebildet werden, wobei die Ränder (9, 9') dieser Auskehlung geeignet sind, diese Basis der Hülse zu bedecken und dabei an sie anzugrenzen, solange das Lager nicht belastet wird.

4. Lager nach Anspruch 2,
**dadurch gekennzeichnet,**
**dass** der Abschnitt der Hülse (1), der senkrecht mit dem Kern (2) zusammenwirkt, eine Strebe (11) ist, die im Inneren dieser Hülse angesetzt wird.

5. Lager nach Anspruch 4,
**dadurch gekennzeichnet,**
**dass** die beiden komplementären Auflageflächen von einer in der Strebe (11) ausgeführten Auskehlung (12), die sich in der senkrecht zur Achsrichtung verlaufenden horizontalen Richtung erstreckt, und von einem an der Basis des Kerns vorgesehenen komplementären Relief (10) gebildet werden.
